# EUROPÄISCHE PATENTSCHRIFT

(11) **EP 0 622 015 B1**
(45) Veröffentlichungstag und Bekanntmachung des Hinweises auf die Patenterteilung: **15.01.1997**
(21) Anmeldenummer: 94105209.4
(22) Anmeldetag: 01.04.1994
(51) Int. Cl.: A01G 3/04, B27B 17/00

(54) **Heckenschere**
Hedge trimmer
Cisaille à haies

(30) Priorität: 08.04.1993 DE 4311624
(43) Veröffentlichungstag der Anmeldung: 02.11.1994
(73) Patentinhaber: GARDENA Kress + Kastner GmbH, D-89079 Ulm (DE)
(72) Erfinder:
(74) Vertreter: Patentanwälte Ruff, Beier, Schöndorf und Mütschele

(56) Entgegenhaltungen:
- EP-A- 0 214 455
- EP-A- 0 347 869
- EP-A- 0 422 773
- EP-A- 0 469 757
- DE-U- 8 716 112
- FR-A- 2 210 487

## Beschreibung

Die Erfindung betrifft ein motorisch betriebenes Handgerät, insbesondere eine Heckenschere, eine Kettensäge o.dgl..

Elektrische Geräte dieser Art werden aufgrund ihres Gewichts und der Art ihrer Handhabung immer mit zwei Händen gehalten. Zu diesem Zweck weisen die Geräte zwei Handgriffe auf, von denen der eine normalerweise auf der Seite des Gehäuses angeordnet ist, an der auch die Schneideinrichtung, beispielsweise die Heckenschere, aus dem Gehäuse herausragt. Diese Schneideinrichtung wird häufig auch Schwert genannt. Der zweite Handgriff ist dann auf der gegenüberliegenden Seite angebracht. Häufig enthält jeder der beiden Griffe einen eigenen Schalter, so daß nur durch Betätigen zweier Schalter das Gerät in Gang gesetzt werden kann.

Bei einer bekannten Heckenschere (EP-B1- 214 455) ist der an der die Schneideinrichtung aufweisenden Seite des Gehäuses angeordnete Tragegriff als geschlossener Bügel ausgebildet, an dessen Innenseite an den verschiedenen Teilen des Bügels mehrere Auslösetasten angeordnet sind. Der an der gegenüberliegenden Seite angeordnete Griff weist eine Grifftaste mit einem Schalter auf. Der Bediener kann nun an dem Haltegriff an jedem der drei Abschnitte des Bügels angreifen und so das Gerät bei der Arbeit führen. Je nach dem, ob die Hecke in normaler Arbeitshöhe, über dem Kopf oder im tieferen Bereich bearbeitet wird, kann der Benutzer umgreifen. Die verschiedenen Arbeitshaltungen sind möglich, ohne daß irgend etwas am Gerät verstellt werden muß. Der Oberbegriff von Anspruch 1 geht aus diesem Dokument hervor.

Zur Ermöglichung unterschiedlicher Arbeitshaltungen ist es ebenfalls bekannt (EP-B1- 347 869), an einem solchen Schneidgerät den Traggriff um mehrere Achsen verstellbar an dem Gehäuse zu lagern. Der Griff kann dann in verschiedenen Stellungen auch arretiert werden. Dies benötigt jedoch eine sehr aufwendige Halterung und Lagerung des Griffs.

Weiterhin ist es bekannt, den am gegenüberliegenden Ende des Geräts angeordneten geschlossenen Bedienungsgriff, der einen Schalter aufweist, um die Längsachse des Geräts verdrehbar anzuordnen. Dies bedeutet allerdings auch einen hohen Aufwand, da in allen möglichen Drehstellungen das Auslöseelement wirksam sein muß.

Der Erfindung liegt die Aufgabe zugrunde, ein elektromotorisch betriebenes Handgerät zu schaffen, das bei konstruktiv einfachem Aufbau eine in unterschiedlichen Arbeitspositionen leicht handhabbare Bedienung zuläßt.

Zur Lösung dieser Aufgabe schlägt die Erfindung ein Gerät mit den Merkmalen des Anspruchs 1 vor. Weiterbildungen sind Gegenstand der Unteransprüche.

Der Handgriff kann beispielsweise die Form eines Winkels aufweisen, also L-förmig ausgebildet sein. Dann kann der Benutzer an zwei verschiedenen Griffabschnitten anfassen und sich für den jeweiligen Einzelfall die geeignete Stellung aussuchen. Gerade in Kombination mit einem bügelförmig ausgestalteten Traggriff, der ebenfalls ein Anfassen an mehreren unterschiedlichen Stellen ermöglicht, entsteht ein Gerät, das in ergonomischer Hinsicht weiter verbessert ist. Es ist für die unterschiedlichen Anwendungsfälle in gleicher Weise auch für Rechts- und Linkshänder geeignet. In Weiterbildung der Erfindung kann vorgesehen sein, daß der Handgriff einen dritten Griffabschnitt aufweist, der zusammen mit den beiden anderen Griffabschnitten einen beispielsweise etwa U-förmigen Griff bildet, dessen beide Schenkel an dem Gehäuse enden, so daß der Griff zusammen mit dem Gehäuse einen geschlossenen Bügel bildet.

Hier schlägt nun die Erfindung vor, auch an dem dritten Griffabschnitt ein Auslöseelement anzuordnen.

Der Begriff Auslöseelement, der hier verwendet wird, soll darauf hinweisen, daß das Betätigen eines derartigen Auslöseelements nur dann zum Einschalten des Antriebs des Geräts führt, wenn bei einer Zweihandbedienung auch ein zweites Auslöseelement betätigt wurde.

Die Erfindung schlägt vor, daß bei dem Gerät das Betätigen eines beliebigen der mehreren Auslöseelemnte den Betrieb des Antriebs auslöst. Der Benutzer muß also nicht etwa mit beiden Händen an dem Handgriff angreifen, sondern nur mit einer Hand.

Aus Sicherheitsgründen kann erfindungsgemäß in Weiterbildung vorgesehen sein, daß die Auslöseelemente jeweils an der Innenseite des jeweiligen Griffabschnitts angeordnet sind.

Erfindungsgemäß kann vorgesehen sein, daß das Auslöseelement als Grifftaste ausgebildet ist, die direkt und/oder indirekt auf einen elektrischen Schalter einwirkt. Um zu erreichen, daß das Betätigen eines einzigen Auslöseelements zum Start des Antriebs führt, können beispielsweise die mehreren Auslöseelemente auf den gleichen elektrischen Schalter einwirken, oder können bei der Anordnung mehrerer elektrischer Schalter diese parallel geschaltet sein.

Erfindungsgemäß kann vorgesehen sein, daß die beiden Griffe als geschlossene Bügelgriffe ausgebildet sind und in senkrecht aufeinander stehenden Ebenen liegen. Dies entspricht einer günstigen Handhaltung beim Handhaben des Geräts.

Insbesondere kann vorgesehen sein, daß die mehreren Auslöseelemente in dem Handgriff auf ein biegsames Element, beispielsweise einen Seilzug einwirken, der seinerseits mit einem elektrischen Schalter wirksam verbunden ist. Der Schalter selbst braucht nicht im Griff angeordnet zu sein, sondern kann im Gehäuse liegen.

Die Anordnung eines biegbaren Elements, beispielsweise eines Seilzugs, hat den großen Vorteil, daß dieses Element beliebig um Ecken herumgeführt werden kann und wenig Platz benötigt.

Erfindungsgemäß kann vorgesehen sein, daß ein Elektrokabel für den Antrieb des Geräts an einer Ecke des Handgriffs zwischen zwei Griffabschnitten aus diesem herausgeführt ist.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: eine perspektivische Ansicht einer Heckenschere nach der Erfindung;
- Fig. 2: eine Seitenansicht der Heckenschere der Fig. 1.

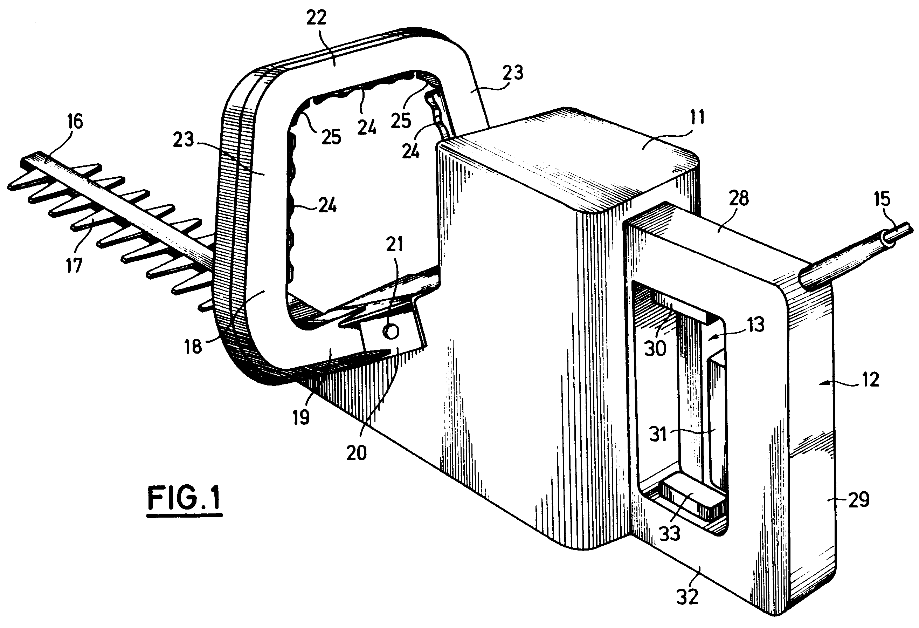

Die in Fig. 1 dargestellte Heckenschere enthält ein zentrales Gehäuse 11, in dem ein Elektromotor sowie der Antrieb für die Messer angeordnet ist. Auf der vorderen rechten Seite ist an dem Gehäuse 11 ein Handgriff 12 angeordnet, der die Form eines geschlossenen rechtwinkligen Bügels aufweist. Er bildet dadurch eine rechteckige Öffnung 13, durch die ein Benutzer eine Hand hindurchstecken kann.

Auf der dem Handgriff 12 und dem elektrischen Kabel 15 abgewandten Seite des Gehäuses 11 ist eine Messerschiene 16 angeordnet, die zwei nur schematisch dargestellte übliche gegeneinander verschiebbare Messer aufweist. Die Messer 17 werden durch ein im Gehäuse 11 angeordnetes Getriebe in hin- und hergehende Bewegung versetzt. Auf der der Messerschiene zugewandten Seite des Gehäuses 11 ist ein Bügelgriff 18 angeschraubt, der etwa Rahmenform aufweist, wobei der untere Rahmenabschnitt 19 nicht geschlossen ist, sondern einen der Breite des Gehäuses 11 in diesem Bereich entsprechenden Abstand aufweist. An den Enden des Bügelgriffs sind senkrecht zum unteren Rahmenabschnitt 19 verlaufend zwei Befestigungsflansche 20 angebracht, die gegenüber dem Profil des Bügels 18 eine vergrößerte Anlagefläche aufweisen. Jeder dieser Flansche 20, von denen in Fig. 1 nur einer zu sehen ist, enthält zwei Löcher 21, durch die eine Schraube hindurchgesteckt werden kann, mit deren Hilfe der Bügelgriff 18 an dem Gehäuse 11 festgeschraubt wird. An dem oberen Rahmenabschnitt 22 und den beiden seitlichen Rahmenabschnitten 23 enthält der Bügelgriff 18 auf seiner Innenseite jeweils eine Taste 24. In den Ecken des Bügelgriffs 18, jeweils zwischen zwei Tasten 24, ist ein nicht bewegbarer Winkelbereich 25 vorgesehen.

Der Handgriff 12 liegt im wesentlichen in einer Ebene, die senkrecht auf der Ebene der Messer 17 steht, wobei die Längsachse der Messerschiene 16 durch die Ebene des Handgriffs 12 verläuft.

Auch der Bügelgriff 18 liegt in einer Ebene, die senkrecht auf der Ebene des Handgriffs 12 steht. Der Bügelgriff 18 kann von dem Benutzer von allen drei Seiten, d.h. von den seitlichen Rahmenabschnitten 22 her ergriffen werden. Der Benutzer greift mit einer Hand um den entsprechenden Rahmenabschnitt herum und kann dadurch zwanglos eine der Tasten 24 eindrücken. Bei gleichzeitigem Eindrücken der Tasten 24 und der Tasten 14 im Handgriff 12 wird das Gerät mit Strom versorgt. Die Heckenschere kann mit gleicher Bequemlichkeit von einem Rechtshänder und einem Linkshänder bedient werden. Ein unbeabsichtigtes Betätigen sowohl der Taste 14 als auch der Taste 24 ist aufgrund der Anordnung auf der Innenseite der Bügel nicht möglich.

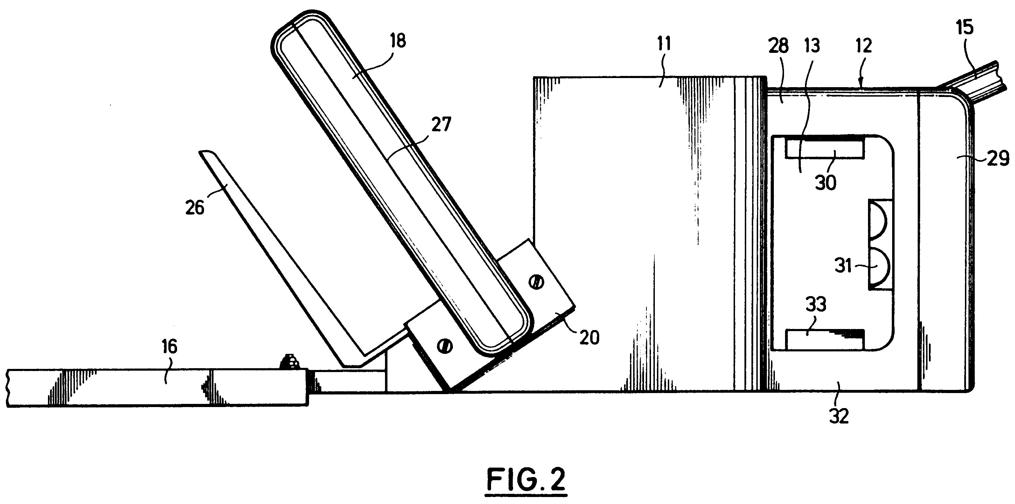

Fig. 2 zeigt die Anordnung der Fig. 1 von der Seite. Der Bügelgriff 18 verläuft schräg gegenüber der Messerschiene 16, wobei zwischen dem Bügelgriff 18 und der Messerschiene 16 noch ein Schutzblech 26 mit Abstand von dem Bügelgriff 18 angeordnet ist. Der Bügelgriff 18 ist zweiteilig ausgebildet, wobei die Trennungslinie 27 zwischen den beiden Teilen des Bügelgriffes in dessen Längsrichtung verläuft. Die Trennungslinie trennt daher auch die Flansche 20 auf beiden Seiten des Gehäuses 11 der Heckenschere.

Der Handgriff 12 auf der dem Bügelgriff 18 abgewandten Seite des Gehäuses 11 enthält einen ersten Griffabschnitt 28, der etwa in Längsrichtung des Geräts verläuft. An diesem ersten Griffabschnitt 28 schließ sich ein zweiter Griffabschnitt 29 an, der quer zur Längsachse des Geräts und damit auch quer zum ersten Griffabschnitt 28 verläuft. Sowohl an der Innenseite des ersten Griffabschnitts 28 als auch an der Innenseite des querverlaufenden Griffabschnitts 29 ist je ein Auslöseelement 30, 31 angeordnet. Beide Auslöseelemente 30, 31 sind als Grifftasten ausgebildet, die sich in den entsprechenden Griffabschnitt 28, 29 einschieben lassen.

An dem zweiten querverlaufenden Griffabschnitt 29 schließt sich ein dritter Griffabschnitt 32 an, der parallel zum ersten Griffabschnitt 28 verläuft und wieder zu dem Gehäuse 11 heranführt. Dadurch bildet der Handgriff 12 zusammen mit dem Gehäuse 11 einen geschlossenen Bügelgriff. Auch der dritte Griffabschnitt 32 weist auf seiner Innenseite ein von dort aus zu betätigendes Auslöseelement 33 auf, das wiederum als Grifftaste ausgelbildet ist.

Zum Einschalten des Antriebs in dem Gehäuse 11 ist es erforderlich, daß der Benutzer eine der Grifftasten 24 am Bügelgriff 18 und eines der Auslöseelemente 30, 31, 33 im Handgriff 12 betätigt. Dabei ist es gleichgültig, welches der drei Auslöseelemente 30, 31, 33 der Benutzer betätigt. Dies kann beispielsweise dadurch erreicht werden, daß jedes der Auslöseelemente auf einen elektrischen Schalter einwirkt, die parallel geschaltet sind. Besonders günstig ist es jedoch, wenn innerhalb des Handgriffs 12 ein Seilzug verläuft, der beispielsweise an seinem einen Ende am Gerät festgespannt ist und dessen anderes Ende auf einen elektrischen Schalter einwirkt. Ein Drücken eines Auslöseelements führt zu einer Veränderung des Wegs, längs dessen der Seilzug verläuft, so daß das freie Ende des Seilzugs ein Stück weggezogen wird, was zum Schließen des Schalters ausreicht.

Einzelheiten einer solchen Seilzuführung sind in der DE-OS 35 31 059 offenbart, auf die hiermit Bezug genommen wird.

Für das normale Arbeiten mit horizontalem Schnitt in mittlerer Körperhöhe wird von einem Benutzer am Handgriff 12 beispielsweise das mittlere Auslöseelemnt 31 betätigt. Für das Arbeiten im unteren Körperbereich ist das Betätigen des oberen Auslöseelements 30 und im oberen Bereich das Betätigen des unteren Auslöseelements 33 günstiger. Beim Überkopfarbeiten empfielt es sich, ebenfalls das Auslöseelement 33 zu verwenden. Wird die Schneidebene gewechselt und in der Vertikalebene geschnitten, kann beispielsweise das Auslöseelement 33 oder 31 und bei Linkshändern das Auslöseelement 30 verwendet werden.

Da die Handhabung der Heckenschere und Betätigung der Einschalttasten individuell verschieden sein kann, bietet die Anordnung von drei Auslöseelementen am Handgriff 12 eine große Auswahlmöglichkeit für ein optimales Arbeiten in verschiedenen Schneidebenen und Körperhöhen.

Statt des in den Figuren dargestellten geschlossenen Griffs könnte unter Umständen auch ein Griff ausreichen, der nur aus den Griffabschnitten 28 und 29 oder nur aus den Griffabschnitten 29 und 32 besteht.

Das den Strom für den elektrischen Antrieb liefernde Elektrokabel 15 ist an einer Ecke des Handgriffs 12 in diesen eingeführt, in einem Bereich zwischen zwei Griffabschnitten 28, 29, so daß die Handhabung durch dieses Elektrokabel 15 nicht beeinträchtigt oder gestört wird.

Alle Auslöseelemente 30, 31, 33 sind von der Innenseite des Handgriffs 12 her betätigbar, so daß ein unbeabsichtigtes Betätigen eines Auslöseelements ausgeschlossen ist.

## Patentansprüche

1. Elektromotorisch betriebenes Handgerät, insbesondere Heckenschere, Kettensäge o.dgl., mit
einem Gehäuse (11) zur Unterbringung eines Antriebs,
einem an einer Gehäuseseite angeordneten Schwert (16),
einem Tragegriff (18) an einer Seite des Gehäuses (11), sowie
einem an der dem Schwert (16) gegenüberliegenden Gehäuseseite angeordneten Haltegriff (12), der
mindestens einen etwa parallel zu der Längsachse des Geräts verlaufenden Griffabschnitt (28),
einen etwa quer zu der Längsachse des Geräts verlaufenden mit dem ersten Griffabschnitt (28) verbundenen Querabschnitt (29) aufweist, dadurch gekennzeichnet, daß der Haltegriff (12)
an beiden Griffabschnitten (28, 29) jeweils ein durch den Benutzer betätigbares Auslöseelement (30, 31) zum Auslösen des Starts des motorischen Antriebs aufweist.

2. Handgerät nach Anspruch 1, mit einem dritten Griffabschnitt (32) zur Bildung eines geschlossenen Haltegriffs (12).

3. Handgerät nach Anspruch 2, mit einem an dem dritten Griffabschnitt (32) angeordneten Auslöseelement (33).

4. Gerät nach einem der vorhergehenden Ansprüche, bei dem das Betätigen eines beliebigen der mehreren Auslöseelemente (30, 31, 33) den Betrieb des Antriebs auslöst.

5. Gerät nach einem der vorhergehenden Ansprüche, bei dem die Auslöseelemente (30, 31, 33) jeweils an der Innenseite des jeweiligen Griffabschnitts (28, 29, 32) angeordnet sind.

6. Gerät nach einem der vorhergehenden Ansprüche, bei dem das Auslöseelement (30, 31, 33) als Grifftaste ausgebildet ist, die direkt und/oder indirekt auf einen elektrischen Schalter einwirkt.

7. Gerät nach einem der vorhergehenden Ansprüche, bei dem die beiden Griffe (18, 12) als geschlossene Bügelgriffe ausgebildet sind und in senkrecht aufeinander stehenden Ebenen liegen.

8. Gerät nach einem der vorhergehenden Ansprüche, bei dem die Griffabschnitte (28, 29, 32) eine das Umfassen des Griffabschnitts (28, 29, 32) aus mehreren Positionen ermöglichende Abmessung aufweisen.

9. Gerät nach einem der vorhergehenden Ansprüche, bei dem alle Auslöseelemente (30, 31, 33) als Grifftasten auf einen in dem Handgriff geführten Seilzug einwirken, der mit einem elektrischen Schalter verbunden ist.

10. Gerät nach einem der vorhergehenden Ansprüchen, bei dem das Elektrokabel (15) an einer Ecke des Haltegriffs (12) zwischen zwei Griffabschnitten (28, 29) aus dem Griff (12) herausgeführt ist.

## Claims

1. Electromotively operated hand tool, particularly hedge trimmer, chainsaw, etc. with
a casing (11) for housing a drive,
a blade member (16) located on one casing side,
a carrying handle (18) on one side of the casing (11) and
a handle (12) located on the casing side opposite to the blade member (16) and which
has at least one handle portion (28) running roughly parallel to the longitudinal axis of the tool,
a transverse portion (29) running roughly transversely to the longitudinal axis of the tool and connected to the first handle portion (28),
characterized in that the handle (12) has on both handle portions (28, 29) in each case one release element (30, 31), operable by the user, for starting up the motor drive.

2. Hand tool according to claim 1 with a third handle portion (32) for forming a closed handle (12).

3. Hand tool according to claim 2 with a release element (33) located on the third handle portion (32).

4. Tool according to one of the preceding claims, wherein the operation of a random release element (30, 31, 33) initiates the operation of the drive.

5. Tool according to one of the preceding claims, wherein the release elements (30, 31, 33) are in each case located on the inside of the particular handle portion (28, 29, 32).

6. Tool according to one of the preceding claims, wherein the release element (30, 31, 33) is constructed as a handle button acting directly and/or indirectly on an electric switch.

7. Tool according to one of the preceding claims, wherein the two handles (18, 12) are constructed as closed bow handles and are located in planes perpendicular to one another.

8. Tool according to one of the preceding claims, wherein the handle portions (28, 29, 32) have dimensions permitting the grasping of said handle portion (28, 29, 32) from several positions.

9. Tool according to one of the preceding claims, wherein all the release elements (30, 31, 33) as handle buttons act on a cable guided in the handle and which is connected to an electric switch.

10. Tool according to one of the preceding claims, wherein the electric cable (15) is passed out of the handle (12) at a corner thereof between two handle portions (28, 29).

## Revendications

1. Appareil à main entraîné par un moteur électrique, et en particulier taille-haie, scie à chaîne ou similaire, comprenant :
- un carter (11) destiné à loger un entraînement,
- un outil (16) disposé sur un côté du carter, - une poignée porteuse (18) sur un côté du carter (11), et :
- une poignée de maintien (12) qui est disposée sur le côté du carter opposé à l'outil (16) et qui comporte au moins une partie de poignée (28) s'étendant à peu près parallèlement à l'axe longitudinal de l'appareil, ainsi qu'une partie transversale (29), celle-ci s'étendant à peu près transversalement par rapport à l'axe longitudinal de l'appareil en étant reliée à la première partie de poignée (28), caractérisé par le fait que la poignée de maintien (12) présente, sur chacune des deux parties de poignée (28, 29), un élément de déclenchement (30, 31) qui peut être actionné par l'utilisateur pour déclencher le démarrage de l'entraînement par le moteur.

2. Appareil à main selon la revendication 1, comprenant une troisième partie de poignée (32) pour former une poignée de maintien (12) qui est fermée.

3. Appareil à main selon la revendication 2, comprenant un élément de déclenchement (33) qui est disposé sur la troisième partie de poignée (32).

4. Appareil selon l'une des revendications précédentes, dans lequel l'actionnement de l'un quelconque des éléments de la pluralité d'éléments de déclenchement (30, 31, 33) déclenche le fonctionnement de l'entraînement.

5. Appareil selon l'une des revendications précédentes, dans lequel les éléments de déclenchement (30, 31, 33) sont chacun disposés sur le côté intérieur de la partie de poignée correspondante (28, 29, 32).

6. Appareil selon l'une des revendications précédentes, dans lequel l'élément de déclenchement (30, 31, 33) est réalisé sous la forme d'une touche qui agit directement et/ou indirectement sur un commutateur électrique.

7. Appareil selon l'une des revendications précédentes, dans lequel les deux poignées (18, 12) sont réalisées sous la forme d'étriers fermés et sont situées dans des plans perpendiculaires entre eux.

8. Appareil selon l'une des revendications précédentes, dans lequel les parties de poignée (28, 29, 32) présentent des dimensions qui permettent de tenir enserrée la partie de poignée (28, 29, 32) à partir de plusieurs positions.

9. Appareil selon l'une des revendications précédentes, dans lequel tous les éléments de déclenchement (30, 31, 33) réalisés sous la forme de touches agissent sur un câble sous gaine qui est guidé dans la poignée et qui est relié à un commutateur électrique.

10. Appareil selon l'une des revendications précédentes, dans lequel le câble électrique (15) sort de la poignée (12) par un coin de la poignée de maintien (12) qui est situé entre deux parties de poignée (28, 29).
